# EUROPEAN PATENT APPLICATION

(11) **EP 4 375 624 A1**
(43) Date of publication of application: **29.05.2024**
(21) Application number: 23212454.5
(22) Date of filing: 27.11.2023
(51) Int. Cl.: G01F 15/00, B33Y 80/00, G01F 15/14, G01F 15/18, G01D 11/24

(54) **A HOUSING FOR ENCLOSING A MEASUREMENT PART OF A FLUID FLOW METER**

(30) Priority: 28.11.2022 DE 102022131437
(71) Applicant: Landis+Gyr GmbH, 90459 Nürnberg (DE)
(72) Inventor: OLBERS, Andreas, 90411 Nürnberg (DE); MOßNER, Johannes Herr, 91315 Höchstadt (DE)
(74) Representative: Marks & Clerk LLP

(57) **Abstract**

A housing for enclosing a measurement part of a fluid flow meter. The housing comprises a channel for receipt of a sealing wire. The channel extends through the housing.

## Description

### Technical Field

Embodiments described herein relate to fluid flow meters, for example water meters, heat meters, cooling meters or gas meters.

### Background

Utility meters, such as fluid flow meters, typically require tamper-proof sealing (commonly also referred to as tamper-evident or security sealing). This sealing secures the meter against manipulation or unintentional opening of the device or a disconnecting of the device from the flow of fluid to be monitored. For example, a tamper-proof seal may be used to indicate whether a pipe connecting to an inlet of a water meter has been removed and reattached by an unauthorised person. As a further example, a tamper-proof seal may be used to indicate whether a temperature sensor of a heat meter has been temporally removed. In these cases, a broken seal may be evidence of tampering.

Commonly such seals are implemented by attaching a sealing wire to the meter in a way that any tampering cannot be done without breaking, e.g. snapping, the wire or a lead seal connecting parts of the wire to each other. This typically requires features on the meter and on the attached component, e.g. the temperature sensor, which enable the sealing wire to be attached in a manner that prevents manipulation. It is desirable that these features are designed such that the devices are compact, and that an authorised person, e.g. a maintenance engineer, can install the tamper-proof seal conveniently and quickly. It is further desirable that these features do not significantly increase the manufacturing time or cost of the devices.

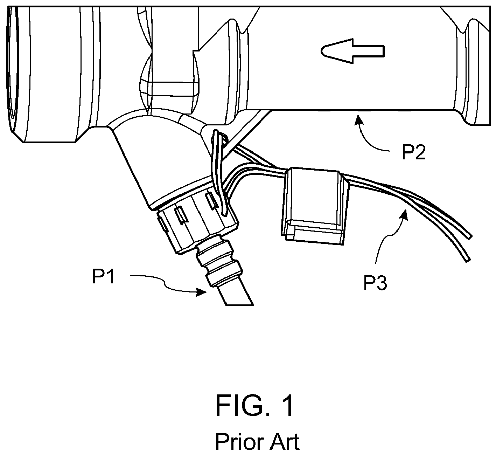

Figure 1 shows an example of a known way of implementing tamper-proof sealing of a heat meter. In this example, the temperature sensor P1 is attached to a flange of the measuring pipe P2 of the heat meter. A union nut secures the sensor to the flange. To enable the installation of a sealing wire P3, which prevents (or at least indicates) unauthorised removal of the temperature sensor P2 from the flange, a sealing hole is provided in webbing of the measuring pipe P2. The sealing wire P3 is installed by leading the wire through an aperture on the union nut and the sealing hole on the measuring pipe. A self-locking seal around the two ends of the wire prevents removal of the wire. A disadvantage of this way of implementing a tamper-proof seal is that the size of the measuring pipe is increased by the need for providing the sealing hole. Further, the drilling the sealing hole requires an additional step in the manufacturing of the meter, and thus increases the manufacturing cost and time.

### Summary

Embodiments aim to provide new and useful flow meter assemblies and housings for enclosing a measurement part of a fluid flow meter. Embodiments enable, for example, tamper-proof sealing of a flow meter assembly without the need of a sealing hole on a measuring pipe of the flow meter. Embodiments achieve this by providing features on the housing of the flow meter to which a sealing wire can be attached. Embodiments may thereby reduce the manufacturing cost of the measuring pipe because the design of the measuring pipe can be simplified.

According to a first aspect there is provided a housing for enclosing a measurement part of a fluid flow meter. The housing comprises a channel for receipt of a sealing wire, the channel extending through the housing.

Optionally, the housing may further comprise a first housing part connected to a second housing part. The channel may be provided at a contact surface of the first housing part and the second housing part.

Optionally, at least one of the first housing part and the second part may comprise a slot which forms at least part of the channel. The slot may be open at the contact surface.

Optionally, at least one of the first housing part and the second housing part may comprise at least one protrusion, and another housing part of the first housing part and the second housing part may comprise at least one corresponding recess for receiving the at least one protrusion when the housing is assembled. The protrusions may be of a length that prevents a sealing wire from being removed from any gap formeable between the first housing part and the second housing part when the first housing part is connected to the second housing part.

Optionally, the first housing part and the second housing part may be connected to each other such that they cannot be detached from each other without being damaged.

Optionally, the first housing part and the second housing part may be connected by engagement of hooks for snap-fit fastening provided on one of the first housing part and the second part, and features for engagement with the hooks provided on the other housing part of the first housing part and the second housing part.

Optionally, at least one of the first housing part and the second housing part is injection moulded.

According to a second aspect there is provided a flow meter assembly. The flow meter assembly comprises a housing according to the first aspect and a measuring pipe attached to the housing. The measuring pipe has an inlet for receiving fluid and an outlet for expelling fluid received at the inlet.

Optionally, the flow meter assembly may further comprise a union nut for attaching an external component to or adjacent to the inlet or the outlet of the measuring pipe. The union nut may have an aperture. The flow meter assembly may further comprise a sealing wire passed through the channel of the housing and the aperture of the union nut to provide a tamper-evident security seal.

Optionally, the flow meter assembly may further comprise a connector for attaching an external component to or adjacent to the inlet or the outlet of the measuring pipe. The flow meter assembly may further comprise a cover covering the connector in a manner that prevents removing or opening of the connector without prior removal of the cover. The cover may have an aperture. The flow meter assembly may further comprise a sealing wire passed through the channel of the housing and the aperture to provide a tamper-evident security seal.

According to a third aspect there is provided a computer program comprising computer executable instructions that, when executed by a processor, cause the processor to control an additive manufacturing apparatus to manufacture a housing of the first aspect.

According to a fourth aspect there is provided method of manufacturing a device via additive manufacturing. The method comprises obtaining an electronic file representing a geometry of a product. The product is a housing of the first aspect. The method further comprises controlling an additive manufacturing apparatus to manufacture, over one or more additive manufacturing steps, the product according to the geometry specified in the electronic file.

### Brief Description of the Drawings

Figure 1 shows a known way of implementing tamper-proof sealing of a heat meter.
Figure 2 shows a schematic view of an exemplary flow meter assembly.
Figure 3 shows an exploded view of the flow meter assembly of Figure 2.
Figure 4 shows a schematic view of a flow meter of the flow meter assembly of Figure 2.
Figure 5 shows a zoom-in view of Figure 4.
Figure 6 shows a portion of a lower housing part of the flow meter of Figure 4.
Figure 7 shows a top-down view of the lower housing of Figure 6.
Figure 8 shows another view of the lower housing of Figure 6.
Figures 9-13 show part-cutaway views of portions of the flow meter assembly of Figure 2.

### Detailed Description

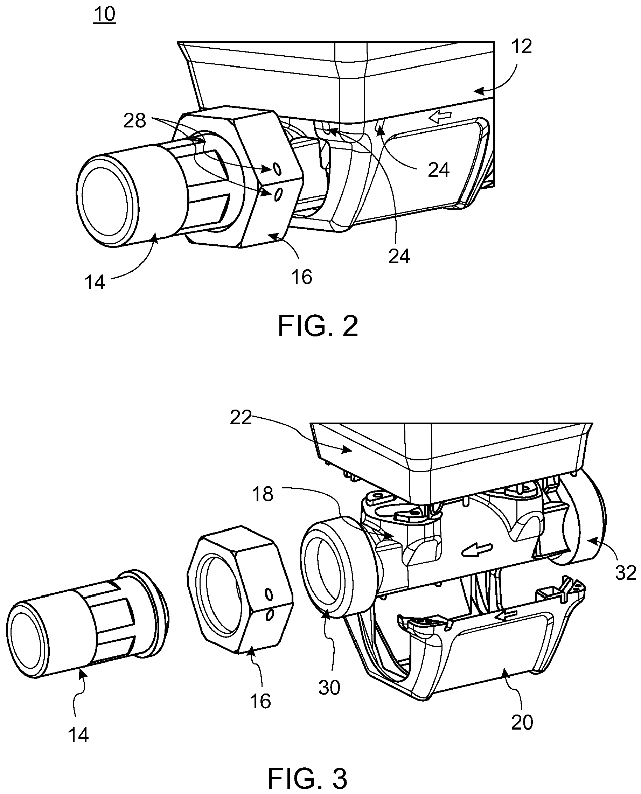

With reference to Figures 2-5, a flow meter assembly of an embodiment is described. Figures 2 and 3 show a perspective view and an exploded view of the flow meter assembly 10. The assembly 10 comprises a flow meter 12, which comprises a measuring pipe 18 and a housing. The assembly 10 may further comprise an external pipe 14, and a union nut 16. The union nut 16 may be arranged such that the pipe 14 is attached to an outlet 30 of the measuring pipe 18. In other embodiments, the union nut 16 may be arranged such that the pipe 14 is attached to an inlet 32 of the measuring pipe 18.

In the embodiment shown in Figure 2, the flow meter 12 is provided in the form of a water meter. The flow meter 12 may be configured to determine an amount of water that flows through the measuring pipe 18. It will be appreciated that in other embodiments, the meter may be differently implemented, e.g. as a heat meter, a cooling meter, a gas meter or the like.

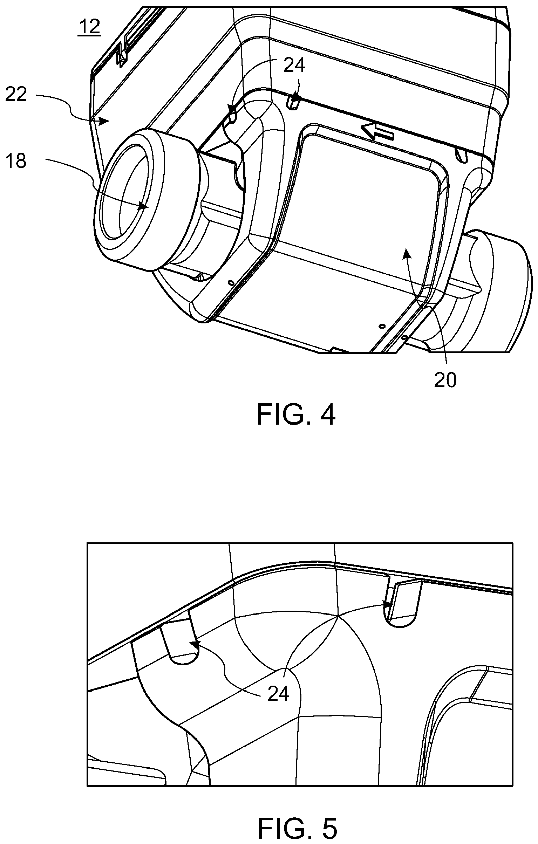

As illustrated in Figure 4, the housing of the flow meter 12 is configured to enclose at least a part of the measuring pipe 18. The measuring pipe 18 may be configured to be attached to the housing of the flow meter 12. In the embodiment shown in Figures 2-4, the housing comprises a lower housing part 20 and upper housing part 22. Either or both of housing parts 20, 22 may be formed by injection moulded.

As described below in detail, the housing of the flow meter 12 further comprises at least one channel for receipt of a sealing wire. Each channel extends through the housing. In other words, the housing defines each channel by two openings at sidewalls of the housing (indicated with reference number 24 in Figures 2 and 4-5) and an internal passage extending from one opening to the other and allowing a sealing wire being fed through the channel from one opening 24 to the other opening 24. In the embodiment of Figures 2-4, the housing has four channels across the four corners of the combined housing. Some of these four channels are not visible in the Figures. By providing a number of channels, flexibility as to where on the assembly the sealing wire is to be attached is provided. In other embodiments the number of channel may be different.

In broad terms, the flow meter assembly 10 enables tamper-proof sealing of the assembly without the need of a sealing hole on the measuring pipe 18. For example, one end of a sealing wire may be inserted into one of the channel openings 24 and passed through the channel to exit the channel from other opening 24. Then this end of the wire may be further passed through an aperture 28 of the union nut 16. The two ends of the sealing wire are then locked with a self-locking clamp, such that the union nut 16 cannot be turned to detach the pipe 14 without breaking the wire.

In the embodiment of Figures 1-2, the union nut 16 comprises the aperture 28. In another embodiment, the union nut 16 may not comprise the aperture 28. In this case, a sealing clamp may be arranged to lock the union nut 16, and the sealing clamp may comprise an aperture for attaching the sealing wire.

In an embodiment where the flow meter is a heat meter, the union nut may be arranged to attach a temperature sensor to the measuring pipe. In this embodiment, the sealing wire arranged through the channel of the housing and through the aperture of the union nut may provide a tamper-proof seal such that the union nut cannot be turned to detach the temperature sensor without breaking the wire.

It is advantageous that the flow meter assembly can be sealed without the need of a sealing hole on the measuring pipe, because this allows improves the ease of manufacturing and the manufacturing cost of the measuring pipe 18.

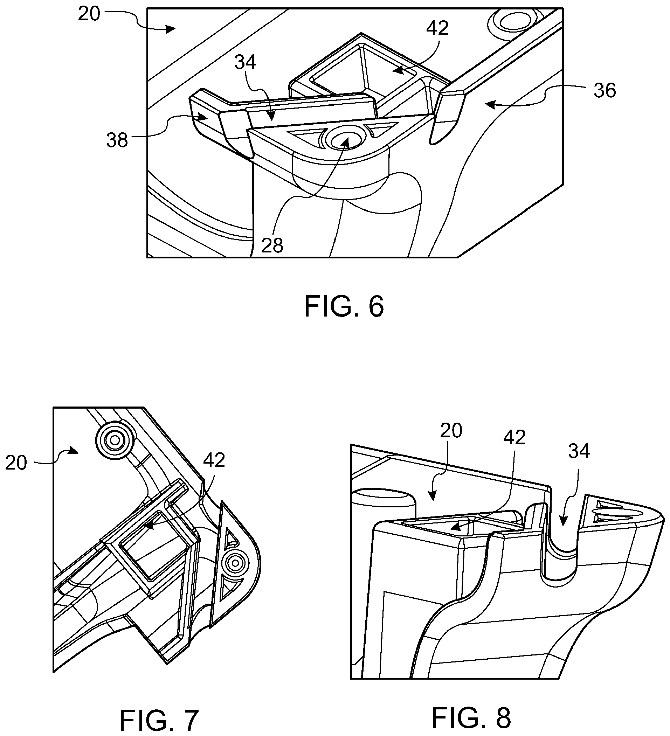

With reference to Figures 5-8, embodiments of the at least one channel of the housing of the flow meter 12 are described. For example, a channel may be provided at a contact surface of the lower housing part 20 and the second housing part 22. Figures 6-8 show views of a portion of the lower housing part 20 comprising a slot 34, which forms at least part of the channel. The slot 34 may be open at the contact surface between the upper and the lower housing. The slot 34 extends from a first sidewall 36 of the lower housing to a second sidewall 38 of the lower housing in a straight manner.

In another embodiment, the slot 34 may not be straight. In this case, the slot 34 may be curved. In a further embodiment, the slot 34 may extend from a first portion of the first sidewall 36 to another portion of the first sidewall 36. In this embodiment, both channel openings 24 may be on the first sidewall 36 or any other sidewall.

As mentioned above, the slot 34 may be open at the contact surface of the housing parts. In this case, the channel is formed by the slot 34 of the lower housing part and a corresponding surface of the upper housing part 22 such that the channel has two openings at sidewalls of the housing and a continuous, internal passage extending from one opening to the other. The slot 34 may have a width and depth such that the sealing wire can be conveniently be inserted. Further, the channel may be substantially straight to allow to easily pass the sealing wire through the channel.

In the embodiment above, the lower housing part 20 comprises the slot 34. In another embodiment the upper housing part 20 may comprise the slot 34. In a further embodiment, both housing parts may comprise respective slots which when assembled cooperate to form the channel.

In general terms, in the embodiments described with reference to Figures 5-8, the channel is cooperatively formed by the housing parts 20, 22. In this case, it is important that the housing parts 20, 22 are connected such that an unauthorised person cannot detach the housing parts 20, 22 so as to non-destructively remove the sealing wire from the channel. In an embodiment, the housing parts 20, 22 may be connected such that the housing parts cannot be detached without being damaged.

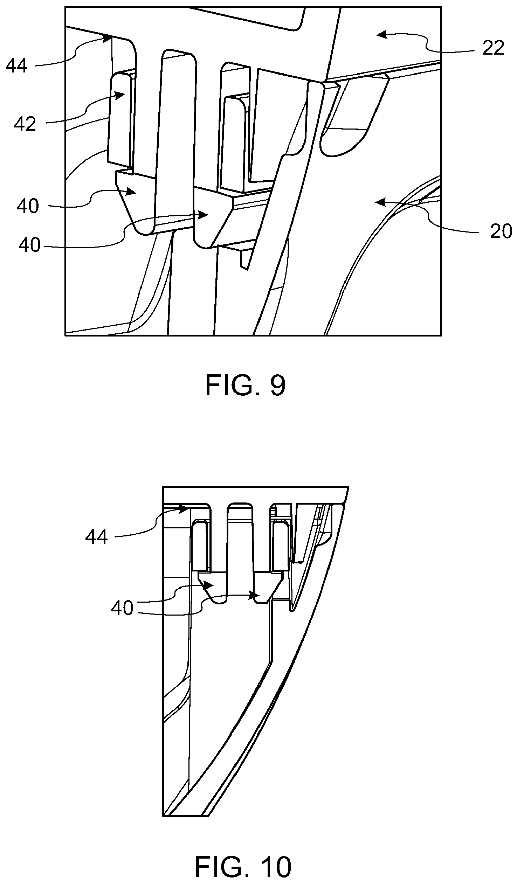

Referring to Figures 9 and 10, features of the housing parts are described which allow connecting the housing parts in a non-releasable manner. In an embodiment, the upper housing part 22 comprises flexible hooks 40 for snap-fit fastening. The hooks 40 may extend downwards from a surface 44 of the upper housing part 22. The lower housing part 20 may comprise features for engagement with the hooks 40 of the upper housing part 22. As shown in Figures 6, 9 and 10, the lower housing part may comprise a hook engagement structure 42 with which the hooks 40 engage to interlock the housing parts 20, 22. The hook engagement structure 42 comprises surfaces configured to initially deflect the hooks 40 from a relaxed position in which the hooks 40 would engage the hook engagement structure 42 if the hooks were fully inserted in the hook engagement structure 42 to a position that allows insertion of the hooks 40 into the hook engagement portions 42, when the hooks 40 are inserted into the structure 42 during assembly of the housing parts 22, 20. The hook engagement structure 42 further comprises recesses to interlock with the hooks 40 once the hooks 40 are fully inserted. The hooks 40 and the structure 42 are configured such that it is not possible to release the hooks 40 from the structure 42 once the housing parts 20, 22 are connected. Thus any gap between the housing parts 20, 22 that could be pried open without damaging the housing parts 20, 22 is not large enough to allow manipulation of the hooks 40 to release them from the structure 40. To this end, the length of the hooks 40 may be sufficiently long, and the structure 42 may be configured to sufficiently limit such a gap.

In the above embodiment, the upper housing part 22 may comprise eight hooks 40. In other embodiments, the upper housing part 22 may comprise a different number of hooks.

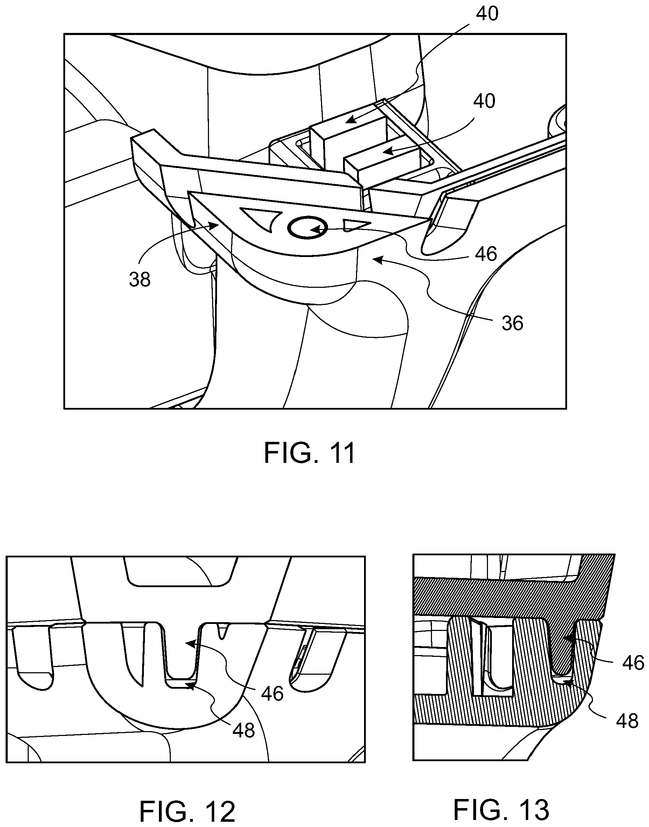

In general terms, to accommodate manufacturing tolerances, the snap-fit fastening of the housing parts described with reference to Figures 9 and 10 may allow a small gap to be formed between the housing parts 20, 22, for example by prying. It can be envisaged that a sealing wire installed, as described above, as a tamper-proof seal, may be non-destructively removed from the channel 34 when such a gap is formed. With reference to Figures 11-13 further features of an embodiment of the lower and upper housing parts 20, 22 are described which prevent a non-destructive removal of a sealing wire from the channel 34.

In an embodiment, the upper housing part 22 may comprise at least one protrusion 46 extending downwards from the lower surface 44. The at least one protrusion 46 may be generally cylindrically shaped. The lower housing part 20 may comprise at least one corresponding recess 48 for receiving the at least one protrusion when the housing is assembled. The protrusion 46 may be of a length that prevents a sealing wire from being removed from any gap formeable between the upper housing part 22 and the lower housing part 20 when the lower housing part 20 is connected to the upper housing part 22. As shown in Figure 11, the protrusion 46 may be provided in the area enclosed between the channel 34 and the first and second sidewalls 36, 38. More generally, the protrusion 46 and the corresponding recess are arranged on a side of the channel 34 that is closest to a side wall of the housing.

In the above embodiment, the upper housing part 22 comprises the at least one protrusion 46, and the lower housing part 20 comprises corresponding recesses 48. In another embodiment, the lower housing part 20 comprises the at least one protrusion 46, and the upper housing part 22 comprises the corresponding recesses 48.

In the embodiment described with reference to Figures 9-13, the housing parts are connected by engagement of hooks 40 with the engagement structure 42. In other embodiments, the two housing parts are connected by gluing or by ultrasound welding.

The flow meter assembly and the housing of the flow meter described with respect to accompanying figures provide a simple and elegant solution to the problem of enabling tamper-proof sealing of a flow meter without the need of providing sealing holes on the measuring pipe. Whilst certain embodiments have been described, these embodiments have been presented by way of example only, and are not intended to limit the scope of the inventions.

## Claims

1. A housing for enclosing a measurement part of a fluid flow meter, the housing comprising a channel for receipt of a sealing wire, the channel extending through the housing.

2. The housing of claim 1 further comprising a first housing part connected to a second housing part, wherein the channel is provided at a contact surface of the first housing part and the second housing part.

3. The housing of claim 2, wherein at least one of the first housing part and the second part comprises a slot which forms at least part of the channel, wherein the slot is open at the contact surface.

4. The housing of any one of claims 3, wherein at least one of the first housing part and the second housing part comprises at least one protrusion, and another housing part of the first housing part and the second housing part comprises at least one corresponding recess for receiving the at least one protrusion when the housing is assembled, wherein the protrusions are of a length that prevents a sealing wire from being removed from any gap formeable between the first housing part and the second housing part when the first housing part is connected to the second housing part.

5. The housing of any one of claims 2-4, wherein the first housing part and the second housing part are connected to each other such that they cannot be detached from each other without being damaged.

6. The housing of any one of claims 2-5, wherein the first housing part and the second housing part are connected by engagement of hooks for snap-fit fastening provided on one of the first housing part and the second part, and features for engagement with the hooks provided on the other housing part of the first housing part and the second housing part.

7. The housing of any preceding claim, wherein at least one of the first housing part and the second housing part is injection moulded.

8. A flow meter assembly comprising a housing according to any preceding claim and a measuring pipe attached to the housing, the measuring pipe having an inlet for receiving fluid and an outlet for expelling fluid received at the inlet.

9. The flow meter assembly of claim 8 further comprising:
a union nut for attaching an external component to or adjacent to the inlet or the outlet of the measuring pipe, the union nut having an aperture; and
a sealing wire passed through the channel of the housing and the aperture of the union nut to provide a tamper-evident security seal.

10. The flow meter assembly of claim 8 further comprising:
a connector for attaching an external component to or adjacent to the inlet or the outlet of the measuring pipe;
a cover covering the connector in a manner that prevents removing or opening of the connector without prior removal of the cover, the cover having an aperture; and
a sealing wire passed through the channel of the housing and the aperture to provide a tamper-evident security seal.

11. A computer program comprising computer executable instructions that, when executed by a processor, cause the processor to control an additive manufacturing apparatus to manufacture a housing of any one of claims 1 to 7.

12. A method of manufacturing a device via additive manufacturing, the method comprising:
obtaining an electronic file representing a geometry of a product, wherein the product is a housing of any one of claims 1 to 7; and
controlling an additive manufacturing apparatus to manufacture, over one or more additive manufacturing steps, the product according to the geometry specified in the electronic file.
